# EUROPEAN PATENT APPLICATION

(11) **EP 2 947 555 A2**
(43) Date of publication of application: **25.11.2015**
(21) Application number: 13800897.4
(22) Date of filing: 27.06.2013
(51) Int. Cl.: G06F 3/048

(54) **CAPACITIVE TOUCH SCREEN TERMINAL AND INPUT METHOD THEREFOR**

(30) Priority: 05.03.2013 CN 201310069114
(71) Applicant: ZTE Corporation, 518057 Shenzhen City, Guangdong Province (CN)
(72) Inventor: LIU, Fengpeng, Shenzhen Guangdong 518057 (CN); HUANG, Lugang, Shenzhen Guangdong 518057 (CN); SUN, Qinli, Shenzhen Guangdong 518057 (CN); LIU, Bin, Shenzhen Guangdong 518057 (CN)
(74) Representative: Zerbi, Guido Maria
(86) International application number: PCT/CN2013/078163
(87) International publication number: WO 2013/182099

(57) **Abstract**

Disclosed are a terminal with capacitive touch screen and an input method thereof, and when the input is performed in the terminal, a capacitance value between each point in a touch screen and an input device as another capacitance electrode is detected, and position information of points at which the capacitance value is greater than a first preset capacitance threshold is recorded to obtain a pre-touch region; the display within the pre-touch region is enlarged; the selecting and inputting is performed within the region where the display is enlarged. The input method of the present invention is capable of enlarging the region to be touched by a user and increasing the input efficiency and improving the user operation experience.

## Description

### Technical Field

The present invention relates to the field of terminal communications, and more particularly, to a terminal with capacitive touch screen and an input method thereof.

### Background of the Related Art

Nowadays, electronic device applications are rapidly developing, and thanks to its wear-resistant and beautiful appearance and good tactility, the capacitive touch screen is widely used. Currently there are various device input methods with the capacitive touch screen, but they all arrange and display "letters", "numbers", "strokes" and "symbols" in a limited size, and the disadvantage of this approach is that the finger touch input is easily a wrong input since the touch screen size of the device is usually not very big and icons of "letters" "numbers" "strokes" and "symbols" are small, thus reducing the input efficiency and degrading the user experience.

### Summary of the Invention

The embodiment of the present invention provides a terminal with capacitive touch screen and an input method thereof, to enlarge a region to be touched by a user, thus to increase the input efficiency and improve the user experience.

An input method of terminal with capacitive touch screen provided in an embodiment of the present invention comprises:
a terminal detecting a capacitance value between each point in the touch screen and an input device as another capacitance electrode, recording position information of points at which the capacitance value is greater than a first preset capacitance threshold, and obtaining a pre-touch region;
enlarging a display within the pre-touch region; and
selecting to input within a region where the display is enlarged.

The step of selecting to input within a region where the display is enlarged comprises:
judging whether a user has inputs within the region where the display is enlarged or not within a preset period of time, and if yes, selecting corresponding options to input within the region where the display is enlarged according to input information of user.

The step of judging whether a user has inputs within the region where the display is enlarged or not within a preset period of time, and if yes, selecting corresponding options to input within the region where the display is enlarged according to input information of user comprises:
detecting a capacitance value between each point within the region where the display is enlarged and an input device as another capacitance electrode, judging whether there are points at which the capacitance value is greater than a second preset capacitance threshold or not, and if yes, determining that the user has inputs within the region where the display is enlarged, and selecting and inputting options corresponding to the points at which the capacitance value is greater than the second preset capacitance threshold.

When determining that there are no points at which the capacitance value is greater than the second preset capacitance threshold, the input method further comprises:
automatically selecting one option to input within the region where the display is enlarged according to a preset rule;
or
not performing any operation, and continuing to wait for user input.

Before detecting the capacitance value between each point in the touch screen and the input device as another capacitance electrode, it further comprises a step of setting a first preset capacitance threshold, and the step comprises:
testing corresponding capacitance values between each point in the touch screen and the input device at different distance intervals; and
setting the first preset capacitance threshold according to a test result.

Similarly, in order to solve the abovementioned technical problem, the embodiment of the present invention further provides a terminal with capacitive touch screen, comprising: a detecting module, a processing module, an enlarging modules and a selecting module;
the detecting module is configured to: detect a capacitance value between each point in a touch screen and an input device as another capacitance electrode, record position information of points at which the capacitance value is greater than a first preset capacitance threshold and report the position information to the processing module;
the processing module is configured to: process the reported position information of points to obtain a pre-touch region;
the enlarging module is configured to: enlarge a display in the pre-touch region; and
the selecting module is configured to: select to input within a region where the display is enlarged.

The selecting module comprises a judging module and an inputting module;
the judging module is configured to: judge whether a user has inputs within the region where the display is enlarged within a preset period of time or not, and if yes, notify the inputting module to select corresponding options for inputting within the region where the display is enlarged according to input information of user.

The judging module comprises a capacitance detecting sub-module and a capacitance judging sub-module;
the capacitance detecting sub-module is configured to: detect a capacitance value between each point within the region where the display is enlarged and an input device as another capacitance electrode; and
the capacitance judging sub-module is configured to: judge whether there are points at which the capacitance value is greater than a second preset capacitance threshold or not, and if yes, determine that the user has inputs within the region where the display is enlarged, and notify the inputting module to select and input options corresponding to the points at which the capacitance value is greater than the second preset capacitance threshold.

The inputting module is further configured to: when the capacitance judging sub-module determines that there are no points at which the capacitance value is greater than the second preset capacitance threshold, automatically select one option to input within the region where the display is enlarged according to a preset rule, or, not perform any operation and continue to wait for user input.

The terminal further comprises a threshold setting module;
the threshold setting module is configured to: test corresponding capacitance values between each point in the touch screen and the input device at different distance intervals, and set the first preset capacitance threshold according to the test result.

The input method in accordance with the embodiment of the present invention determines the region to be touched by the user in advance by comparing the capacitance values before the input device contacts the touch screen, and enlarges the display within the region to facilitate the user to perform selecting and inputting; the input method in accordance with the embodiment of the present invention greatly improves the capacitive screen input operation experience and increases the input efficiency.

### Brief Description of Drawings

FIG. 1 is a schematic diagram of a process of an input method of terminal with capacitive touch screen in accordance with a first embodiment of the present invention;
FIG. 2 is a schematic diagram of a terminal processing procedure in accordance with the first embodiment of the present invention;
FIG. 3 is a schematic diagram of a process of selecting to input within a region where the display is enlarged in accordance with the first embodiment of the present invention;
FIG. 4 is a principle diagram of using a finger to approach to pretest in accordance with the first embodiment of the present invention;
FIG. 5 is a schematic diagram of a first structure of a terminal with capacitive touch screen in accordance with a second embodiment of the present invention;
FIG. 6 is a schematic diagram of a second structure of the terminal with capacitive touch screen in accordance with the second embodiment of the present invention;
FIG. 7 is a schematic diagram of a third structure of the terminal with capacitive touch screen in accordance with the second embodiment of the present invention;
FIG. 8 is a schematic diagram of a fourth structure of the terminal with capacitive touch screen in accordance with the second embodiment of the present invention.

### Preferred Embodiments of the Invention

The embodiment of the present invention uses the basic principles of capacitive touch screen, and when an input device, such as a human finger, which works as another capacitance electrode approaches from far to near until contacting, the scanned capacitance value changes from not detectable, to detected as small, and finally to detected as large. According to the order of actions of a finger approaching the touch screen, it may first set the first threshold which is defined as an "approaching event", and further trigger enlarging the corresponding region, and after the user touches, the device will detect a second threshold which is defined as a "touching event". By enlarging the pre-touch region, it improves the user input operation and increases the input efficiency.

The input device in the embodiment of the present invention refers to all objects, such as a living body with charges, which are capable of forming a capacitor with a capacitive touch screen, and a general living body with charges refers to the human body, and in the related art the terminal is generally operated by forming a capacitor with a human finger and a capacitive touch screen.

Hereinafter, the embodiments of the present invention will be described in detail in conjunction with the accompanying figures.

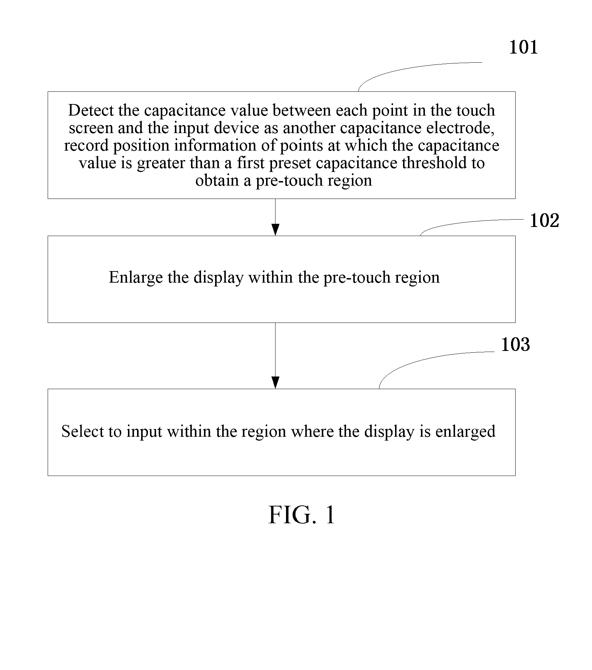

The first embodiment:
As shown in FIG. 1, the present embodiment provides an input method of terminal with capacitive touch screen, comprising the following steps:
   in step 101: the terminal detects the capacitance value between each point in the touch screen and the input device as another capacitance electrode, records position information of points at which the capacitance value is greater than a first preset capacitance threshold to obtain a pre-touch region;
   in step 102: it is to enlarge the display within the pre-touch region;
   in step 103: it is to select to input within the region where the display is enlarged.

The input method according to the present embodiment determines the region to be touched by the user in advance before the input device contacts the touch screen, enlarges the display within the region, which facilitates the input of user and improves the operation experience of user. It solves the problems in the related art that the user touch input is easily a wrong input due to arranging and displaying "letters", "numbers", "strokes" and "symbols" in a limited size.

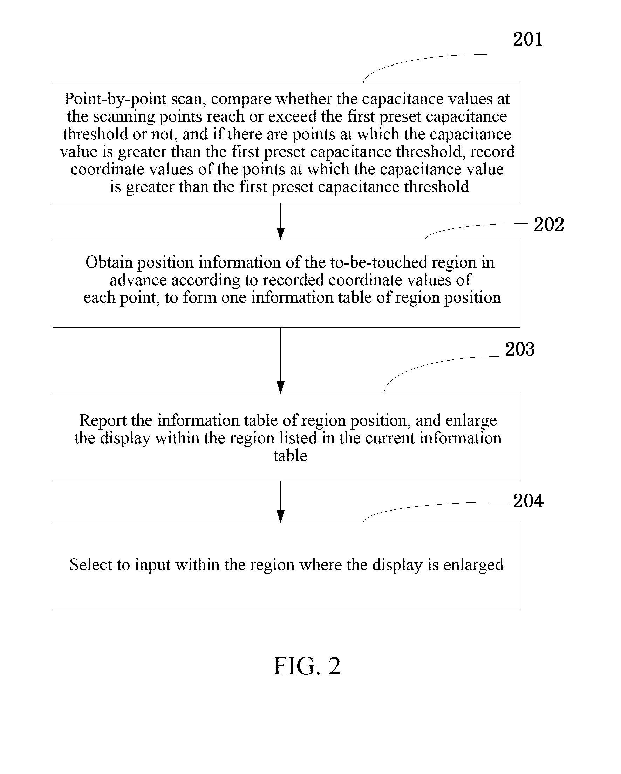

In the following, examples are used to illustrate the specific process of the input method according to the present embodiment:
with the input method according to the present embodiment, when the terminal with capacitive touch screen accesses the input interface, as shown in FIG. 2, the terminal's processing procedure comprises:
   in step 201: it is to point-by-point scan, compare whether the capacitance values at the scanning points reach or exceed a first preset capacitance threshold or not, and if there are points at which the capacitance value is greater than the first preset capacitance threshold, record coordinate values of the points at which the capacitance value is greater than the first preset capacitance threshold;
   in step 202: it is to obtain position information of the to-be-touched region in advance according to recorded coordinate values of each point, to form one information table of region position;
   in step 203: it is to report the information table of region position, and enlarge the display within the region listed in the current information table.

In step 204: it is to select to input within the region where the display is enlarged.

The display within the region is enlarged in the abovementioned step 203, and the enlargement factor, the boundary processing of the enlarged icon, the shape of the enlarged region, and how to process the covered icon can be determined by itself, for example, it can be determined in advance that the enlargement factor is 2; the shape of the enlarged region is a bubble shape; the boundary is processed through bold double strips; the covered icon is "opaque and half displayed" and does not respond to the touch, and so on.

The process of selecting to input within the region where the display is enlarged in the abovementioned step 103 may comprise:
judging whether the user has inputs within the region where the display is enlarged in a preset period of time or not, and if yes, selecting a corresponding option for inputting according to the user's input information within the region where the display is enlarged, and if no, automatically selecting one option for inputting according to a preset rule within the region where the display is enlarged, or not performing any operation and continuing to wait for user input.

After enlarging the pre-touch region, the input method according to the present embodiment detects whether the user has inputs within the region where the display is enlarged in the preset period of time or not, and if yes, it indicates that the user has made an input selection, and the terminal will input the option selected by the user, and if no, it indicates that the user does not make an input selection or the input does not meet the requirements, then the terminal has two processing methods, one is selecting to input within the region where the display is enlarged according to the preset rule, for example, selecting a first character to input; the other is not performing any operation and continuing to wait for user input.

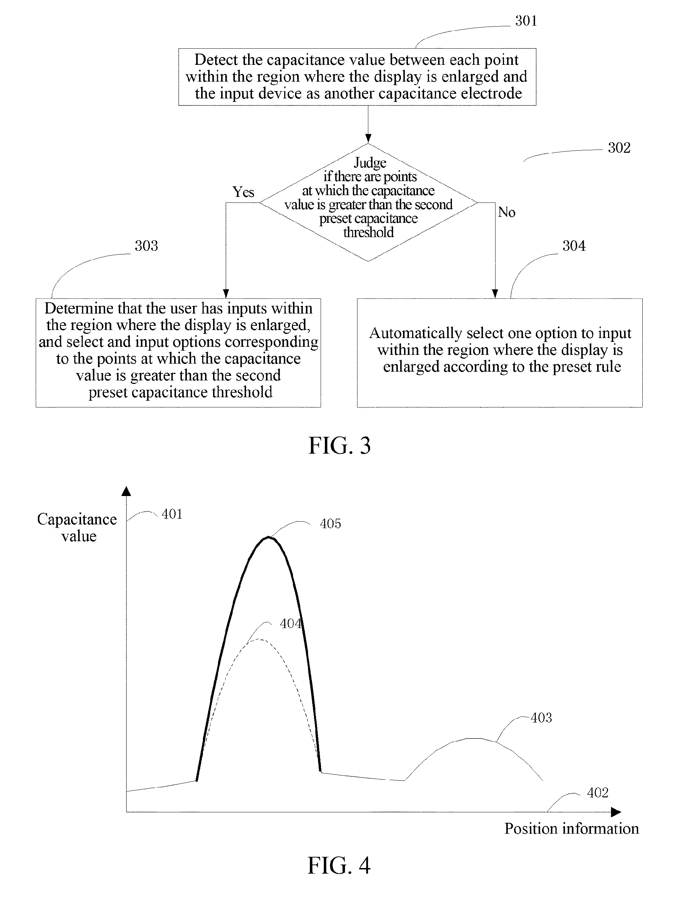

As shown in FIG. 3, in the following, the specific process of the capacitive touch terminal selecting to input within the region where the display is enlarged is described in detail:
in step 301: it is to detect the capacitance value between each point within the region where the display is enlarged and the input device as another capacitance electrode;
in step 302: it is to judge whether there are points at which the capacitance value is greater than the second preset capacitance threshold or not, and if yes, proceed to step 303, and if no, proceed to step 304;
in step 303: it is to determine that the user has inputs within the region where the display is enlarged, and select and input options corresponding to the points at which the capacitance value is greater than the second preset capacitance threshold;
in step 304: it is to automatically select one option to input within the region where the display is enlarged according to the preset rule.

The input method according to the present embodiment further comprises a step of setting the first preset capacitance threshold before detecting the capacitance value between each point in the touch screen and the input device as another capacitance electrode, and the step specifically comprises:
testing corresponding capacitance values between each point in the touch screen and the input device at different distance intervals;
setting the first preset capacitance threshold according to the test result.

Take the input device as a human finger for example, the capacitance value between the finger and each point in the touch screen can be tested when the finger is at different distances from the touch screen, and FIG. 4 shows the relationship between the distance and the capacitance value, wherein the 401 coordinate axis represents the capacitance values, and the 402 coordinate axis represents the position information, that is, the coordinates of the pre-contact point or the contact point of the finger at the touch screen; the thick parabola 405 represents the touch point; the black dashed parabola 404 represents valid approaching points (near points), and the black parabola 403 represents invalid approaching points (far points). A capacitor will be formed when the finger is approaching the capacitive touch screen, and the capacitance value is relatively small, and the capacitance value becomes larger when the finger is approaching nearer, for example, the pre-contact point of the finger and touch screen at 403 represents that the finger is not near enough to the touch screen; and the pre-contact point of the finger and touch screen at 404 represents that the finger is near enough to the touch screen. Therefore in the process of the finger approaching the capacitive touch screen in a practical case, the capacitance value at the corresponding position can be obtained, and then the first preset capacitance threshold can be set according to a result of test. For example, the capacitance value at 404 can be selected as the first preset threshold.

In a practical setting process, in order to more reasonably set the first preset capacitance threshold, it also needs to consider the following factors: (1) material of the touch screen; the capacitance formed by the same closeness are different when the material is different and the ITO (Indium tin oxide) thickness and the thickness of dielectric layer are different. (2) performance of the selected touch driving IC (Integrated Circuit), distinguishing the "approaching event" is different when the sampling accuracy of driving IC is different, i.e., the accuracy of reading the capacitance value is different; (3) the "distance" corresponding to the actual finger approaching event requires a lot of empirical values, and the most appropriate "distance value" is determined by acquiring the appropriate finger approaching distance in a large-scale.

The setting of the first preset capacitance threshold in the present embodiment can be implemented during the device development, and the threshold is a fixed value after the device is out of factory, of course, other selections can be made, for example, the user sets the value.

The input method of the present embodiment can be applied to all devices with the capacitive touch screen, such as a mobile phone with capacitive touch screen, a PAD and so on.

### The second embodiment

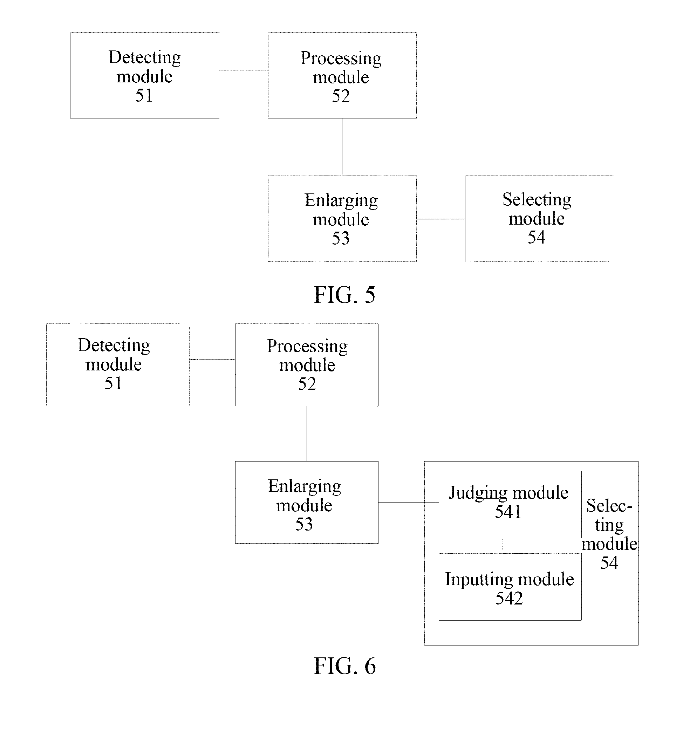

As shown in FIG. 5, the present embodiment provides a terminal with capacitive touch screen, comprising: a detecting module 51, a processing module 52, a enlarging module 53 and a selecting module 54;
the detecting module 51 is used to detect a capacitance value between each point in the touch screen and an input device as another capacitance electrode, record position information of points at which the capacitance value is greater than the first preset capacitance threshold and report it to the processing module 52;
the processing module 52 is configured to process the reported position information of the points to obtain a pre-touch region;
the enlarging module 53 is configured to enlarge the display in the pre-touch region;
the selecting module 54 is configured to: select to input within the region where the display is enlarged.

The terminal according to the present embodiment determines the region to be touched by the user in advance before the input device contacts the touch screen, enlarges the display within the region, which facilitates the input of user and improves the user operation experience. It solves the problems in the related art that the user touch input may be easily a wrong input due to arranging and displaying "letters", "numbers", "strokes" and "symbols" in a limited size.

As shown in FIG. 6, the selecting module 54 in the terminal with capacitive touch screen in the present embodiment may comprise a judging module 541 and an inputting module 542; the judging module 541 is configured to: judge whether the user has inputs within the region where the display is enlarged within a preset period of time or not, and if yes, notify the inputting module 542 to select a corresponding option to input within the region where the display is enlarged according to the input information of user. After the pre-touch region is enlarged, the terminal may select to input within the region where the display is enlarged according to the input information of user. The terminal in the present embodiment may judge the position of pre-contact point of input device, such as the finger, in advance, and enlarge the region, which enables the user to touch easily.

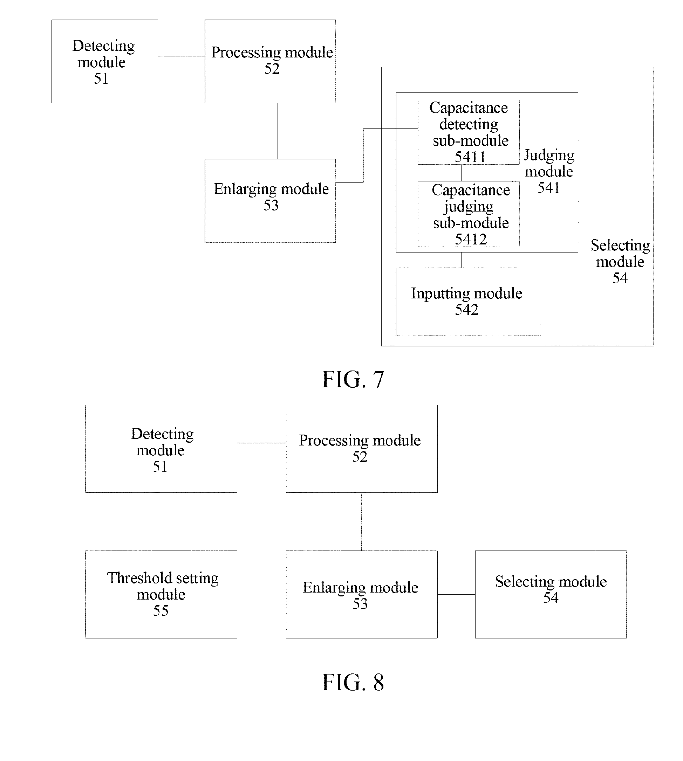

As shown in FIG. 7, the judging module 541 in the terminal according to the present embodiment comprises a capacitance detecting sub-module 5411 and a capacitance judging sub-module 5412;
the capacitance detecting sub-module 5411 is configured to: detect the capacitance value between each point within the region where the display is enlarged and the input device as another capacitance electrode; and
the capacitance judging sub-module 5412 is configured to: judge whether there are points at which the capacitance value is greater than the second preset capacitance threshold or not, and if yes, determine that the user has inputs within the region where the display is enlarged, and notify the inputting module to select and input options corresponding to the points at which the capacitance value is greater than the second preset capacitance threshold.

The terminal according to the present embodiment judges whether the user has inputs in the region where the display is enlarged or not through the second preset capacitance threshold, and for the second preset capacitance threshold, generally the touch screen provider may provide a relatively good value, or the method for setting the first preset capacitance threshold can be used to obtain the second preset capacitance threshold.

The abovementioned inputting module 542 is further configured to: when the capacitance judging sub-module 5412 determines that there are no points at which the capacitance value is greater than the second preset capacitance threshold, automatically select one option to input within the region where the display is enlarged according to the preset rule, or, not perform any operation and continue to wait for the user input.

As shown in FIG. 8, the terminal according to the present embodiment further comprises a threshold setting module 55; the threshold setting module 55 is configured to: test corresponding capacitance values between each point in the touch screen and the input device at different distance intervals, and set the first preset capacitance threshold according to the test result.

The setting of the first preset capacitance threshold in the present embodiment can be implemented during the device development, and the threshold is a fixed value after the device is out of factory, of course other selections can be made, for example, the user sets the value.

The input method according to the present embodiment can be applied to all devices with the capacitive touch screen, such as a mobile phone with capacitive touch screen, a PAD and so on.

The above content is further detailed descriptions of the present invention in combination with specific embodiments, and it cannot be considered that specific embodiments of the present invention are limited to these descriptions. For a person ordinarily skilled in the technical field of the present invention, on the premise of without departing from the inventive concept, a number of simple deductions or replacements can also be made and should be considered as belonging to the protection scope of the present invention.

### Industrial Applicability

The input method in accordance with the embodiment of the present invention determines the region to be touched by the user in advance by comparing the capacitance values before the input device contacts the touch screen, and enlarges the display within the region to facilitate the user perform selecting and inputting; the input method in accordance with the embodiment of the present invention greatly improves the experience of capacitive screen input operation and increases the input efficiency.

## Claims

1. An input method of terminal with capacitive touch screen, comprising:
a terminal detecting a capacitance value between each point in a touch screen and an input device as another capacitance electrode, recording position information of points at which the capacitance value is greater than a first preset capacitance threshold, and obtaining a pre-touch region;
enlarging a display within the pre-touch region; and
selecting to input within a region where the display is enlarged.

2. The input method of terminal with capacitive touch screen of claim 1, wherein the step of selecting to input within a region where the display is enlarged comprises:
judging whether a user has inputs within the region where the display is enlarged or not within a preset period of time, and if yes, selecting corresponding options to input within the region where the display is enlarged according to input information of the user.

3. The input method of terminal with capacitive touch screen of claim 2, wherein the step of judging whether a user has inputs within the region where the display is enlarged or not within a preset period of time, and if yes, selecting corresponding options to input within the region where the display is enlarged according to input information of the user comprises:
detecting a capacitance value between each point within the region where the display is enlarged and an input device as another capacitance electrode, judging whether there are points at which the capacitance value is greater than a second preset capacitance threshold or not, and if yes, determining that the user has inputs within the region where the display is enlarged, and selecting and inputting options corresponding to the points at which the capacitance value is greater than the second preset capacitance threshold.

4. The input method of terminal with capacitive touch screen of claim 3, wherein when determining that there are no points at which the capacitance value is greater than the second preset capacitance threshold, the input method further comprises:
automatically selecting one option to input within the region where the display is enlarged according to a preset rule;
or
not performing any operation and continuing to wait for a user input.

5. The input method of terminal with capacitive touch screen of any one of claims 1-4, wherein before detecting the capacitance value between each point in the touch screen and the input device as another capacitance electrode, the method further comprises a step of setting a first preset capacitance threshold, and the step comprises:
testing corresponding capacitance values between each point in the touch screen and the input device at different distance intervals; and
setting the first preset capacitance threshold according to a result of the test.

6. A terminal with capacitive touch screen, comprising: a detecting module, a processing module, an enlarging modules and a selecting module; wherein
the detecting module is configured to: detect a capacitance value between each point in a touch screen and an input device as another capacitance electrode, record position information of points at which the capacitance value is greater than a first preset capacitance threshold and report the position information to the processing module;
the processing module is configured to: process the reported position information of the points to obtain a pre-touch region;
the enlarging module is configured to: enlarge a display in the pre-touch region; and
the selecting module is configured to: select to input within a region where the display is enlarged.

7. The terminal with capacitive touch screen of claim 6, wherein the selecting module comprises a judging module and an inputting module;
the judging module is configured to: judge whether a user has inputs within the region where the display is enlarged within a preset period of time or not, and if yes, notify the inputting module to select corresponding options to input within the region where the display is enlarged according to input information of the user.

8. The terminal with capacitive touch screen of claim 7, wherein the judging module comprises a capacitance detecting sub-module and a capacitance judging sub-module;
the capacitance detecting sub-module is configured to: detect a capacitance value between each point within the region where the display is enlarged and an input device as another capacitance electrode; and
the capacitance judging sub-module is configured to: judge whether there are points at which the capacitance value is greater than a second preset capacitance threshold or not, and if yes, determine that the user has inputs within the region where the display is enlarged, and notify the inputting module to select and input options corresponding to the points at which the capacitance value is greater than the second preset capacitance threshold.

9. The terminal with capacitive touch screen of claim 8, wherein the inputting module is further configured to: when the capacitance judging sub-module determines that there are no points at which the capacitance value is greater than the second preset capacitance threshold, automatically select one option to input within the region where the display is enlarged according to a preset rule, or, not perform any operation and continue to wait for a user input.

10. The terminal with capacitive touch screen of any one of claims 6-9, further comprising a threshold setting module;
the threshold setting module is configured to: test corresponding capacitance values between each point in the touch screen and the input device at different distance intervals, and set the first preset capacitance threshold according to a result of the test.
